# EUROPEAN PATENT APPLICATION

(11) **EP 1 291 743 A2**
(43) Date of publication of application: **12.03.2003**
(21) Application number: 02012813.8
(22) Date of filing: 10.06.2002
(51) Int. Cl.: G05B 19/042

(54) **Method for assigning an address to an actuator to be controlled via a bus system**

(30) Priority: 20.07.2001 LU 90805
(71) Applicant: Delphi Technologies, Inc., Troy, MI 48007 (US)
(72) Inventor: Livolsi, Salvatore, 7703 Bissen (LU); Dupont, Bertrand, 8080 Bertrange (LU)
(74) Representative: Beissel, Jean

(57) **Abstract**

A method for assigning an address to an actuator to be controlled via a bus system is presented. The actuator comprises an actuating element coupled to an actuatable element. The method comprises the steps of:
actuating the actuating element so that it moves from a first position to a second position, which corresponds to a first end position of the actuatable element; and
assigning an address to the actuator, based on the displacement length of the actuating element between the first position and the second position.

## Description

### FIELD OF THE INVENTION

The present invention generally relates to a method for assigning an address to an actuator to be controlled via a bus system.

### BACKGROUND OF THE INVENTION

In devices using a plurality of actuators, it has been proposed to use bus systems as interface between the actuators and the device control unit. An example of such a device is a heating, ventilating and air conditioning module (or HVAC module) for an automotive vehicle. An HVAC module generally takes the form of a casing, which is connected to a fresh air inlet and which comprises the various elements needed to control air temperature and air flow. The HVAC module is further connected to air ducts leading to air nozzles in the passenger compartment. Such an HVAC module is generally provided with a plurality of pivotable flaps, which allow the mixing of cool and warm air as well as the dispatching of air between the various air ducts connecting the passenger compartment. Actuation of the pivotable flaps is carried out by means of actuators.

In such an HVAC module, the use of a bus system to connect the actuators to the HVAC control unit is interesting, since it permits a simplification of the wiring harness connecting the actuators to the control unit. Indeed, in a bus system, a single bus loop is used to interconnect each of the actuators and the control unit. This however means that an address needs to be assigned to each actuator for its identification in the bus system.

A first possibility for assigning an address to an actuator is to preset an address in the actuator, whereby upon connection of the actuator to the bus system the former can readily be controlled. This however has the disadvantage that for a HVAC module having e.g. up to sixteen pivotable flaps, sixteen different actuators―i.e. having each a different preset address―must be used. The need of a large variety of parts complicates assembly and servicing of the module. In particular, since the actuators generally have the same aspect, there is a risk of confusion between them, and an actuator may be mounted at a wrong place to the HVAC casing, thereby leading to malfunctioning.

To avoid such actuators having a preset address, it has been proposed to use cooperating coding means provided in the connection between the actuator and the bus loop. This is may be done by means of additional, coding pins in the bus plug and corresponding coding contacts in the socket on the actuator. By providing e.g. four coding pins in the plug and four corresponding contacts in the socket, it is possible to realize a binary coding of up to sixteen actuators, this binary coding being then available for identifying the actuator. Upon connection of the actuator to the bus system, the actuator will read the binary code, which will be assigned to the actuator as its address. Unfortunately connection errors are still possible. Moreover, a different plug has to be used for each actuator.

### OBJECT OF THE INVENTION

The object of the present invention is to provide an improved way of assigning an address to an actuator to be controlled via a bus system, which allows a standardization of the parts and which permits to avoid connection errors. This object is achieved by a method for assigning an address to an actuator as claimed in claim 1.

### SUMMARY OF THE INVENTION

The present invention relates to a method for assigning an address to an actuator to be controlled via a bus system. The actuator has an actuating element, which is coupled to an actuatable element to be actuated. According to the present invention, the actuating element is actuated so that it moves from a first position to a second position, which corresponds to an end position of the actuatable element. It shall be appreciated that the actuator is then assigned an address on the basis of the displacement length of the actuating element between the first position and the second position.

Hence, in the present method the address of the actuator is determined on the basis of a certain travel of the actuating element. This travel will depend on the configuration of the actuatable element to which the actuating element is coupled.

When a plurality of actuators are connected to the bus system, all the actuators should preferably be actuated in the same way between the first and second positions so that the determination of their respective address is based on the same kind of displacement. To obtain a different address for each actuator, the configuration of the actuatable element and of the actuator may e.g. be varied, so that that a different displacement length between first and second positions exists for each actuator.

In practice, the address value which is assigned to the actuator is preferably derived from a look-up table comprising a list of displacement lengths and of corresponding addresses. It would however also be possible to use the value of the displacement length itself as address value.

A big advantage of the present method is that it allows the use of identical actuators for each actuatable element, since the address will in fact be determined by the actuator's environment. This more importantly means that the address will necessarily be correct, and that assembly errors can be avoided.

As a result, the present method allows the control of a plurality of identical actuators via a bus system, and permits an error-free assembly of the actuators. Such a standardization of the actuators means a reduction of manufacturing costs, and simplifies stocking, assembly and servicing.

In a first embodiment, the first position is the packaging position of the actuating element. The term "packaging position" refers to the position of the actuating element with respect to the actuator housing as set by the manufacturer, i.e. before first use in the bus system.

In another embodiment, the first position corresponds to a second end position of the actuatable element. The displacement length of the actuating element between two positions, which both correspond to end positions of the actuatable element, is thus used as a basis for determining the actuator's address.

In a more preferred embodiment, an address is assigned to the actuator on the basis of a couple of displacement lengths of the actuating element. The first displacement length is obtained from the movement of the actuating element in a first direction, between a first position corresponding to the packaging position of the actuating element and a second position corresponding to an end position of the actuatable element. The actuating element is subsequently actuated to move in an opposite, second direction from the second position to a third position, which corresponds to a second end position of the actuatable element, whereby a second displacement length is obtained. In such a case, the actuator is preferably assigned an address which is derived from a look-up table comprising a list of displacement length couples and of corresponding addresses. It is to be noted that the measurement of the second displacement length permits to determine the clearance of the actuatable element, which may be fed back to the control unit to update the actual configuration of the actuatable element.

The first and second displacement length values should preferably be stored after their determination. In case no second displacement length is available, the actuating element is preferably actuated to move between the second and third positions, or inversely, to determine the second displacement length from the travel between said second and third positions.

Preferably, the configuration of the actuatable elements should be such that each actuatable element actuated by an actuator controlled via a given bus system has a unique clearance. It follows that a different second displacement length will exist for each actuatable element.

The present method can advantageously be implemented to assign an address to actuators comprising electric motors, wherein the actuating element comprises an output shaft of the motor. In such a case, the displacement length of the actuating shaft is determined as an angular displacement length of the output shaft. The present method can however also be implemented with linear actuators, wherein the actuating element comprises a rod and the displacement length is determined by the measurement of the linear displacement of the rod.

According to another aspect of the invention, an actuated device comprising a plurality of actuatable elements is proposed. A corresponding plurality of actuators is provided, each actuator being associated with one actuatable element and comprising an actuating element coupled to its actuatable element. A control unit allows to control the actuators via a bus system connecting the actuators to each other as well as the control unit, each actuator having an address for communicating with the control unit. It will be appreciated that address assigning means are associated with each of said actuators for assigning an address to the latter. The address is determined on the basis of the displacement length of the actuating element between a first position and a second position, which corresponds to an end position of the actuatable element to which the actuating element is connected.

Such an address assigning means will thus assign to an actuator an address which depends on a certain travel of its actuating element, the latter generally depending on the possibility of travel of the actuatable element. By arranging the actuating element and the actuatable element in such a way that the travel between the first and second positions of the actuating element is different for each actuator, a different address can be determined for each actuator. Moreover, this means that identical actuators can be used to actuate each actuatable element, without risking assembly errors, since the address of each actuator will be determined by the actuator's environment.

In a first embodiment of the actuated device, the actuators are identical and have the same packaging angle when they are assembled to the device. The displacement length will thus preferably correspond to the travel of the actuating element from its packaging position to a second position, in which the actuatable element is in an end position.

In another embodiment, the address of each actuator is based on the displacement length between two positions of the actuating element, which both correspond to an end position of the actuatable element.

In these two embodiments, the actuator is preferably assigned an address value which is derived from a look-up table comprising a list of displacement lengths and of corresponding address values.

In a more preferred embodiment, the address of each actuator is determined on the basis of a couple of displacement lengths of the actuating element. The first displacement length corresponds to the displacement length of the actuating element between the packaging position and a second position corresponding to a first end position of the actuatable element. The second displacement length is the displacement length of the actuating element between two positions, which both correspond to end positions of the actuatable element. In such a case, the address of the actuator is preferably assigned an address which is obtained from a look-up table comprising a list of displacement length couples and of corresponding addresses.

Controller means are advantageously associated with each of said actuators for actuating the actuating element, and the address assigning means are included therein. Such controller means may be provided in the actuator or in a connector plug of the bus system, which is to be plugged into a socket of the actuator.

### BRIEF DESCRIPTION OF THE DRAWINGS

The present invention will now be described, by way of example, with reference to the accompanying drawing, in which:

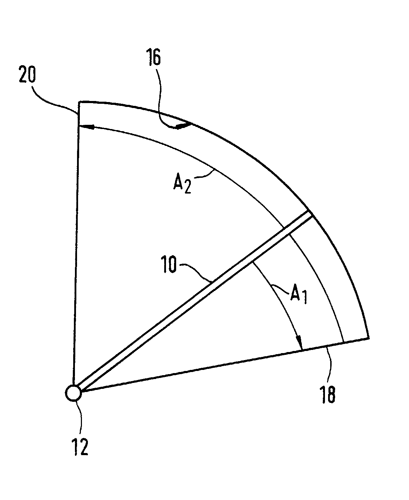

FIG. 1: is a schematic diagram of a pivotable flap in an HVAC module.

### DETAILED DESCRIPTION OF A PREFERRED EMBODIMENT

A preferred embodiment of a method for assigning an address to an actuator in accordance with the invention will now be described. In the present embodiment, the method is implemented for assigning addresses to actuators of a heating ventilating and air conditioning module (HVAC module) of an automotive vehicle.

An HVAC module generally takes the form of a casing, which is connected to a fresh air inlet and which comprises the various elements needed to control air temperature and air flow. The HVAC module is further connected to air ducts leading to air nozzles in the passenger compartment. Such an HVAC module is generally provided with a plurality of pivotable flaps, which allow the mixing of cool and warm air as well as the dispatching of air between the various air ducts connecting the passenger compartment. Actuation of the flaps is carried out by means of actuators.

An actuator typically has an electric motor with an output shaft, which is coupled to the pivotable flap to be actuated. The actuator is mounted to an outer side of the HVAC casing and its output shaft is inserted in a shaft portion of the pivotable flap, which is rotatably supported in the casing wall.

Fig.1 schematically shows such a pivotable flap, indicated 10, used to open and close a port of the HVAC casing. Reference sign 12 indicates the flap shaft, to which an actuator (not shown) is coupled. The disc sector 16 schematically indicates a port of the HVAC module, in which the flap 10 can pivot. As can be seen, the flap 10 is allowed to pivot between end positions 18 and 20. In the first end position 18 the port is e.g. open and in the second end position 20 the port is e.g. closed.

The other flaps of the HVAC module are mounted in the same way as the flap 10 of Fig.1. The actuators associated with the plurality of flaps are connected to each other and to the HVAC control unit via a bus system. Such a bus system may e.g. comprise a bus loop with three cables: a power cable, a ground cable and a data cable.

In order for the control unit to be capable of individually controlling the actuators to actuate the flaps, an address must be assigned to each actuator in the bus system.

It will be appreciated that, according to the present method, the address assigned to each actuator is determined on the basis of an angular displacement length of the actuator's output shaft. This is done by actuating the output shaft in such a way as to rotate in a first direction, from a first position of the output shaft, to a second position of the output shaft, which corresponds to an end position of the flap 10. An address is then assigned to the actuator, based on this angular displacement length of the output shaft between the first and second positions.

It is to be noted that in the present embodiment the output shaft is directly connected to the flap shaft. This means that a given angular displacement of the actuator output shaft causes a same angular displacement of the flap.

In practice, the address of the actuator will preferably be based on a couple of displacement lengths of the actuator's output shaft. The first displacement length is the angular displacement length between a first position of the output shaft corresponding to the so-called packaging position, and a second position corresponding to the first end position 18 of the flap when the output shaft rotates in clockwise direction. The angular displacement length corresponding to this travel is the angle A1 indicated in Fig.1. The packaging position is the position of the output shaft with respect to the actuator, in particular to its casing, as set by the manufacturer, i.e. before its first use in the HVAC module.

The determination of the angle A1 should thus be effected as soon as the actuator is mounted to the HVAC casing and connected to the bus loop. In case the electric motor of the actuator is a stepper motor, the detection of the angle of rotation of the output shaft may e.g. be based on the number of pulses required to bring the output shaft from one position to the other. When the actuator is equipped with a D.C. motor, the rotation angle of the output shaft can e.g. be determined from a difference of potential measured with an annular potentiometer.

Next, the second displacement length is preferably determined by actuating the output shaft so that it moves in the opposite direction―i.e. counterclockwise in the present embodiment―from this second position, wherein the flap 10 is in the first end position 18, to a third position corresponding to the second end position 20 of the flap 10. This angular displacement length corresponds to the angle A2 in Fig.2, which is the clearance angle of the flap 10.

The actuator is then assigned an address, which is derived from a look-up table comprising a list of couples of displacement lengths (A1, A2) and a corresponding address value.

In a device comprising a plurality of actuators such as an HVAC module, the present method for assigning an address will preferably be programmed in the microcontroller that is generally incorporated in each actuator. The look-up table comprising the list of displacement length and of corresponding addresses is thus preferably stored in each microcontroller. Since it is allowed by the present method, the use of identical actuators is preferred, having in particular same dimensions, same fixing means, same packaging angles and same microcontrollers.

Upon mounting of the actuators to the HVAC casing and connection to the bus loop, the microcontroller of each actuator will start the address assigning method, as described above. All the actuators will rotate their output shaft in a same, first direction from the packaging position to a second position corresponding to an end position of their respective flap, in order to determine A1. The actuators will then rotate their output shaft in the opposite direction from the second position to a third position, which corresponds to the second end position of the flap, in order to determine A2. The address value of the actuator will then be derived from the look-up table on the basis of the couple of angular displacement lengths A1 and A2, and the corresponding address will be assigned to the actuator.

These addresses will be used by the HVAC control unit to control the actuators in order to actuate the flaps.

It is clear that in order to individually control the actuators, each of them should have a distinct address. In the present method, the addresses depend on A1 and A2. Hence, in order to have a distinct address for each actuator, the couple (A1, A2) should be unique for each actuator. The angle A2 is determined by the travel between the two end positions, and thus depends on the clearance angle of the flap in the port of the HVAC module. The angle A1 however depends on the position of the actuator with respect to the HVAC casing. Indeed, since the use of identical actuators is preferred, the latter will have the same packaging angle and the position of the fixing means on the actuator will also be the same. Moreover, due to standardization, the position of the orientation mark at the end of the output shaft will generally be the same. Hence, a variation of A1 will generally be obtained by changing the position of the actuator on the HVAC casing. One may thus adapt the clearance angles of the flaps and the positions of the actuators so that a variety of couples of displacement lengths may be available.

It will be appreciated that in the present method the address of the actuator is deduced from the environment of the actuator in the module, whereby the actuator necessarily has the correct address. The addresses of the actuators will have been preset in the HVAC control unit, which will thus be able to control the actuators directly after completion of the present method.

Moreover, the second displacement length, which corresponds to the real clearance angle of the flap, may be fed back to the HVAC control unit. Such an update of the clearance angle of the flap, which may vary from the preset value due to manufacturing tolerances, permits a precise control of the flap position.

Furthermore, the microcontroller is preferably programmed so as to redetermine A2 every time the second displacement length is lost. Indeed, A2 can be determined at any time whereas A1 can only be determined once. This is particularly interesting in case of power failure. In order to be able to determine the address of the actuator from the second displacement length only, the flaps should be mounted in the HVAC module in such a way that each flap has a different clearance angle, i.e. a different A2.

Although such a procedure of re-determination of the second displacement length is preferably programmed in the microcontroller, a similar procedure could be triggered by the HVAC control unit to acquire again the second displacement length of an actuator that lost it.

It remains to be noted that the opening and closure of a port of an HVAC module may also be controlled by means of a film valve comprising openings therein, instead of a pivotable flap. The film valve is wound on a first roller, which is fixed on one side of the port opening. A second roller is installed on the opposite side of the port opening, and an end of the film valve is attached to this second roller, so that the film valve which is stretched in front of the port opening closes the latter. To open the port, the second roller is rotated by means of an actuator so as to unwound the film valve from the first roller and bring an opening in the film valve in coincidence with the port opening.

It is to be noted that the present method can also be used to assign an address to the actuator coupled to the second roller of such a device. When installed in the HVAC casing, the film is wound on the first roller. Hence, there is only one possible direction of rotation for the second roller. The actuator should preferably be coupled to the first roller in such a way that the actuator cannot rotate in the direction of determination of A1 upon assembly. As a result, the first displacement length of this actuator will be zero. The actuator will then start determining A2. Depending on the length of the film, the output shaft of the actuator may make several revolutions until the film is unwound. The angle A2 thus corresponds to the second angular displacement length between the first position of the actuator output shaft, in which the film is wound on the first roller, and the second position of the output shaft, in which the film is unwound from the first roller. As for actuators coupled to pivotable flaps, the address assigned to the actuator is preferably derived from a look-up table comprising a list of displacement length couples and of corresponding addresses.

## Claims

1. A method for assigning an address to an actuator to be controlled via a bus system, said actuator comprising an actuating element coupled to an actuatable element, **characterized by** the following steps:
actuating said actuating element so that it moves from a first position to a second position, which corresponds to a first end position of said actuatable element; and
assigning an address to said actuator, based on the displacement length of said actuating element from said first position to said second position.

2. The method according to claim 1, **characterized in that** said first position is a packaging position of said actuating element.

3. The method according to claim 1, **characterized in that** said first position corresponds to a second end position of said actuatable element.

4. The method according to claim 1, **characterized in that**
said first position is a packaging position of said actuating element, wherein said actuating element is moved in a first direction between said first and second positions so as to determine a first displacement length; and
said actuating element is subsequently actuated to move in an opposite, second direction from said second position to a third position, which corresponds to a second end position of said actuatable element, wherein a second displacement length corresponding to the displacement length between said second and third positions is obtained;
wherein said address assigned to said actuator is determined on the basis of said first and second displacement lengths.

5. The method according to claim 4, **characterized in that** in case no second displacement length value is available, said actuating element is actuated to move between said second and third positions, respectively said third and second positions, so as to determine said second displacement length.

6. The method according to any one of the preceding claims, **characterized in that** said actuator comprises an electric motor and said actuating element comprises an output shaft of said motor, wherein said displacement length is an angular displacement length of said output shaft.

7. The method according to any one of the preceding claims, **characterized in that** said actuator is a linear actuator and said actuating element is a rod of said linear actuator.

8. The method according to any one of the preceding claims, **characterized in that** said bus system connects said actuator to a control unit, in which said address of said actuator has been preset for controlling said actuator.

9. Use of the method according to any one of claims 1 to 8 in a heating, ventilating and/or air conditioning module comprising a plurality of actuators controlled via a bus system to assign an address to each of said actuators.

10. An actuated device comprising:
a plurality of actuatable elements;
a corresponding plurality of actuators, each actuator being associated with one actuatable element and comprising an actuating element coupled to said actuatable element;
a control unit for controlling said actuators; and
a bus system connecting said actuators with each other and said control unit, wherein each actuator has an address for communicating with said control unit;
**characterized by**
address assigning means associated with each of said actuators for assigning an address to each actuator on the basis of the displacement length of said actuating element between a first position of said actuating element and a second position of said actuating element, which corresponds to an end position of the actuatable element to which it is connected.

11. The actuated device according to claim 10, **characterized in that** said displacement length corresponds to the travel of said actuating element from a packaging position to a second position, in which said actuatable element is in an end position.

12. The actuated device according to claim 10, **characterized in that** said address of each actuator is based on the displacement length between two positions of said actuating element, which each correspond to an end position of said actuatable element.

13. The actuated device according to claim 10, **characterized in that** said address is based on a couple of displacement lengths, said first displacement length being the displacement length of said actuating element in a first direction between said first and second positions; and said second displacement length being the displacement length of said actuating element in an opposite, second direction between said second position and a third position, which corresponds to a second end position of said actuatable element.

14. The actuated device according to any one of claims 10 to 13, **characterized in that** said address assigning means include a look-up table with a list of displacement lengths, respectively of couples of displacement lengths, and of corresponding addresses.

15. The actuated device according to any one of claims 10 to 14, **characterized by** controller means associated with each of said actuators for actuating its respective actuating element, said controller means including said address assigning means.

16. The actuated device according to claim 15, **characterized in that** said controller means is included either in said actuator or in a connector plug of said bus system.

17. The actuated device according to any one of claims 10 to 16, **characterized in that** said actuated device is a heating ventilating and/or air conditioning module, especially for an automotive vehicle, **in that** said actuators comprise electric motors, said actuating elements are output shafts of said electric motors and said actuatable elements are pivotable flaps.
